# FASCICULE DE BREVET EUROPEEN

(11) **EP 1 931 218 B1**
(45) Date de publication et mention de la délivrance du brevet: **25.02.2009**
(21) Numéro de dépôt: 06778792.9
(22) Date de dépôt: 06.07.2006
(51) Int. Cl.: A23L 1/10, A23L 1/182, H05B 3/40, F28F 5/06, B29C 47/84

(54) **PROCEDE DE TRAITEMENT DE GRAINES CEREALES ENTIERES DECORTIQUEES, ET DISPOSITIF DE MISE EN OEUVRE DUDIT PROCEDE**
VERFAHREN ZUR VERARBEITUNG VON GANZEN ENTSPELZTEN GETREIDEKÖRNERN SOWIE GERÄT ZUR DURCHFÜHRUNG DES VERFAHRENS
METHOD FOR PROCESSING WHOLE DEHULLED CEREAL GRAINS, AND DEVICE FOR IMPLEMENTING SAID METHOD

(30) Priorité: 20.07.2005 FR 0507699
(43) Date de publication de la demande: 18.06.2008
(73) Titulaire: Panzani, 69006 Lyon (FR); E.T.I.A.-Evaluation Technolgique, Ingenierie et Applications, 60201 Compiegne (FR)
(72) Inventeur: MINIER, Chantal, F-13400 Aubagne (FR); AREKION, Isabelle, F-13004 Marseille (FR); LEPEZ, Olivier, F-60260 Lamorlaye (FR); SAJET, Philippe, F-60610 Lacroix Saint-ouen (FR)
(74) Mandataire: Jaunez, Xavier
(86) Numéro de dépôt international: PCT/FR2006/001613
(87) Numéro de publication internationale: WO 2007/010108

(56) Documents cités:
- WO-A-99/39549
- WO-A-99/65332
- US-A- 5 547 277

## Description

La présente invention concerne le traitement de graines céréales entières décortiquées, notamment le riz et le blé.

### ARRIERE-PLAN TECHNOLOGIQUE

Les procédés de traitement conventionnels de graines céréales entières décortiquées, en particulier le riz, comportent des étapes successives de trempage des graines dans de l'eau, d'égouttage, d'étuvage, et de séchage.

L'invention s'intéresse plus particulièrement à l'étape d'étuvage parmi les étapes du procédé de traitement.

L'état de la technique le plus proche est constitué par le document WO-A-99/65332, lequel document décrit un procédé et une installation d'étuvage, avec une mise en oeuvre dans une enceinte agencée sous la forme d'un conduit tubulaire hélicoïdal qui est mis en vibration, le riz grimpant ainsi progressivement à l'intérieur de l'enceinte et subissant le traitement thermique destiné à son étuvage. On utilise alors pour le traitement thermique un chauffage direct des graines par les parois de l'enceinte tubulaire hélicoïdale. Cet enseignement est intéressant comme essai d'une gestion de l'atmosphère surplombant les graines lors de leur progression par vibration, en adoptant un mode d'étuvage confiné qui est très favorable. Cependant, on s'est aperçu que cette technique reste extrêmement sensible aux propriétés rhéologiques et physiques du produit, de sorte que l'installation est dans la pratique très délicate à régler. En effet, dès que l'on rencontre des variations significatives des propriétés du produit, en particulier de son humidité, ces variations vont inévitablement interférer avec le transfert progressif du produit dans l'enceinte tubulaire hélicoïdale, avec par suite un risque de collage localisé du produit contre la paroi de transport mécanique. Un tel collage est doublement défavorable, dans la mesure où d'une part il induit un grillage localisé du produit, ce qui affecte les qualités organoleptiques du produit récupéré en sortie de l'installation, et d'autre part ce collage affecte aussi la régularité de la section de passage, et induit une perturbation qui ne fait que s'accentuer au fur et à mesure de l'utilisation. Tout ceci oblige à prévoir un nettoyage périodique de l'intérieur de l'enceinte tubulaire hélicoïdale, ce qui est extrêmement contraignant.

En dehors des traitements d'étuvage, on connaît également une autre technique de traitement de solides divisés dans laquelle l'organe de transfert est une hélice montée pour tourner autour d'un axe longitudinal dans une enveloppe tubulaire, le moyen chauffant étant alors constitué soit par l'enveloppe, soit par un tube autour duquel s'enroule l'hélice, ledit tube étant parcouru par un fluide porté à une température élevée. Cependant, on s'est aperçu que seuls les solides se trouvant à proximité de l'enveloppe chauffante ou du tube chauffant sont effectivement soumis à un flux thermique efficace. Le chauffage des solides divisés à traiter est donc incomplet, irrégulier et peu efficace.

On connaît aussi des hélices à double enveloppe présentant un passage interne dans lequel on fait passer un fluide thermique. Outre un coût de fabrication élevé, la grande inertie thermique d'un tel agencement interdit tout changement rapide de régime thermique.

L'état de la technique est également illustré par le document EP-A-1 051 880, qui enseigne un dispositif de traitement thermique de solides divisés comprenant au moins un organe de transfert ayant un axe longitudinal et une partie hélicoïdale formée dans sa masse d'un matériau électriquement conducteur relié à une source d'alimentation en énergie électrique pour constituer un moyen de transfert chauffant. Il convient toutefois de noter que l'enveloppe tubulaire est alors soit une auge traditionnelle pour un traitement à ciel ouvert, soit une auge cylindrique. D'une façon générale, on se borne à contrôler la température en amont et en aval de l'organe de transfert, et éventuellement aussi, l'humidité. Le dispositif est cependant inadapté pour des traitement tels que l'étuvage de graines céréales entières décortiquées.

On pourra enfin se référer, au titre de l'arrière-plan technologique, aux documents FR-A-2 775 621, US-A-6 030 112, US-A-5 869 810, US-A-5 547 277, US-A-5 455 402, et US-A-4 331 854.

### OBJET DE L'INVENTION

La présente invention a pour objet de concevoir un procédé et un dispositif de traitement de graines céréales entières décortiquées permettant un pilotage d'installation beaucoup plus souple qu'avec les installations conventionnelles précitées, avec une relative insensibilité aux propriétés rhéologiques et physiques des graines concernées, et ce sans pour autant nécessiter une mise en oeuvre complexe ou onéreuse.

L'invention a également pour objet de concevoir un procédé et un dispositif de traitement convenant tout particulièrement au cas particulier du riz, pour lequel les contrôles de température et d'humidité jouent un rôle considérable.

### DEFINITION GENERALE DE L'INVENTION

Le problème précité est résolu conformément à l'invention grâce à un procédé de traitement de graines céréales entières décortiquées, comportant des étapes successives de trempage des graines dans de l'eau, d'égouttage, d'étuvage, et de séchage, dans lequel l'étape d'étuvage est mise en oeuvre dans une enceinte fermée équipée d'une vis hélicoïdale de transfert qui est chauffante et montée pour tourner autour de son axe dans ladite enceinte, ladite vis chauffante assurant à la fois le convoyage des graines d'une extrémité amont à une extrémité aval de l'enceinte et le chauffage direct des graines convoyées, avec un contrôle de la température et de la vitesse de rotation de la vis chauffante et une gestion de l'atmosphère environnant les graines lors du convoyage de celles-ci, pour que les graines entrant dans l'enceinte fermée à une température égale ou supérieure à la température ambiante et avec une teneur pondérale en eau comprise entre 30% et 38% (en poids) sortent de ladite enceinte fermée à une température d'au moins 98°C et avec une teneur pondérale en eau d'au moins 18% (en poids).

Dans un mode d'exécution particulier dans lequel l'enceinte fermée est à parois chauffantes, il sera avantageusement prévu qu'on contrôle également la température des parois chauffantes de l'enceinte pour le chauffage des graines et la gestion de l'atmosphère environnant lesdites graines. En particulier, le contrôle des températures de la vis chauffante et des parois chauffantes de l'enceinte sera effectué par une régulation séparée.

Dans un autre mode d'exécution dans lequel l'enceinte fermée est équipée d'une alimentation en vapeur d'eau sous pression, il sera avantageux de prévoir qu'on contrôle le maintien de la pression régnant à l'intérieur de l'enceinte fermée dans un intervalle compris entre 0 et 1 KPa par injection ou expulsion de vapeur d'eau, pour une gestion optimale de l'atmosphère environnant les graines convoyées.

De préférence, les contrôles des températures et de la vitesse de rotation, ainsi que la gestion de l'atmosphère environnant les graines convoyées, sont mis en oeuvre pour que les graines étuvées sortent de l'enceinte fermée à une température comprise entre 98°C et 110°C et avec une teneur pondérale en eau comprise entre 18% et 35% (en poids)

Enfin, dans un autre mode d'exécution dans lequel l'enceinte fermée est équipée de moyens étanches amont d'entrée de graines à étuver et de moyens étanches aval de sortie de graines étuvées, il sera avantageux de prévoir que les moyens d'entrée et de sortie des graines sont actionnés périodiquement, tandis que les graines sont convoyées en continu par la vis chauffante.

L'invention concerne également un dispositif de mise en oeuvre d'un procédé de traitement présentant l'une au moins des caractéristiques précitées, ledit dispositif étant remarquable en ce qu'il comprend une enceinte d'étuvage fermée équipée d'une part de paliers étanches associés aux extrémités amont et aval d'une vis hélicoïdale de transfert qui est chauffante et montée pour tourner autour de son axe dans ladite enceinte, et d'autre part de moyens étanches amont d'entrée de graines à étuver et de moyens étanches aval de sortie de graines étuvées, ladite enceinte fermée étant en outre reliée à une source d'alimentation en vapeur sous pression pour soumettre l'espace intérieur étanche ainsi délimité à une pression déterminée comprise entre 0 et 1 KPa.

De préférence, la vis chauffante comporte une partie hélicoïdale formée dans sa masse d'un matériau électriquement conducteur, ladite partie hélicoïdale étant reliée à une source d'alimentation en énergie électrique.

Avantageusement alors, la partie hélicoïdale de la vis chauffante est équipée de palettes agencées pour relever les graines qui sont au contact des parois de l'enceinte d'étuvage, et l'enceinte d'étuvage est constituée d'un matériau isolant électriquement.

Conformément à un mode d'exécution particulier, on pourra prévoir que l'enceinte d'étuvage est une enceinte tubulaire à parois chauffantes.

Il sera par ailleurs avantageux de prévoir que l'enceinte d'étuvage est équipée d'un circuit d'alimentation et d'un circuit de purge pour l'introduction ou l'expulsion de vapeur sous pression, chacun desdits circuits étant respectivement muni d'une vanne pilotée.

De préférence enfin, les moyens d'entrée de graines à étuver et/ou les moyens de sortie de graines étuvées sont réalisés sous la forme d'écluses ou de sas étanches. En particulier, les moyens d'entrée et de sortie sont des écluses à vannes guillotines pilotées.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 est une vue schématique des différentes étapes d'un procédé de traitement selon l'invention, étant entendu que l'objet principal de l'invention concerne l'étape d'étuvage ;
- la figure 2 est une vue schématique d'un dispositif mettant en oeuvre le procédé de traitement selon l'invention, cette vue permettant de mieux distinguer les organes de commande mécaniques et électriques associés ; et
- la figure 3 est une vue partielle en perspective du dispositif de la figure 2, du côté du moteur d'entraînement dudit dispositif.

### DESCRIPTION DETAILLEE D'UN MODE DE REALISATION PREFERE

La description qui va suivre sera donnée en référence au traitement particulier de graines de céréales entières décortiquées, à savoir le riz, en particulier le riz cargo ou complet, étant entendu que l'invention n'est aucunement limitée à ce type particulier de graines, mais pourra aussi bien s'appliquer à d'autres graines, en particulier le blé.

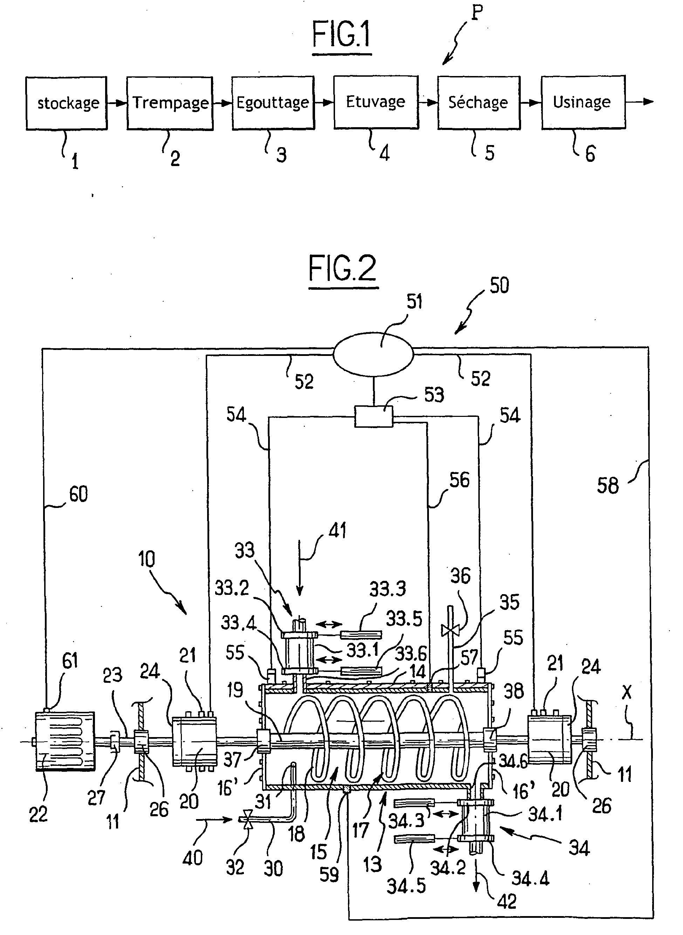

D'une façon générale, comme cela est illustré sur la figure 1, le procédé de traitement P comporte des étapes successives que l'on a simplement schématisées ici par des blocs.

Le bloc 1 représente le stockage du riz à traiter, ce stockage étant assuré par des moyens conventionnels du type silo avec vis d'extraction et tapis de convoyage. Les graines de riz à traiter sont ainsi amenées à un poste de trempage 2.

Le trempage est classiquement effectué dans de l'eau, à une température en général comprise entre 40°C et 75°C, pendant une durée allant de trois à huit heures. On prévoit en général que le rapport du volume d'eau sur le volume de riz est au moins égal à 2,5. A l'issue du trempage, on récupère des graines de riz présentant une teneur pondérale en eau qui est en général comprise entre 31% et 38% (en poids), ceci à coeur des graines.

En aval du trempage, les graines de riz ainsi récupérées arrivent à un poste d'égouttage 3, qui comporte éventuellement un essorage. L'égouttage classique s'effectue au moyen de tamis vibrants ou de façon gravitaire. Il convient de noter que cette étape d'égouttage ne modifie aucunement la teneur pondérale en eau des graines de riz, mais a seulement pour effet de diminuer la quantité d'eau libre en surface.

Les graines de riz égouttées arrivent ensuite à un poste d'étuvage 4, lequel est enfin suivi d'un poste de séchage 5 et d'un éventuel poste d'usinage 6.

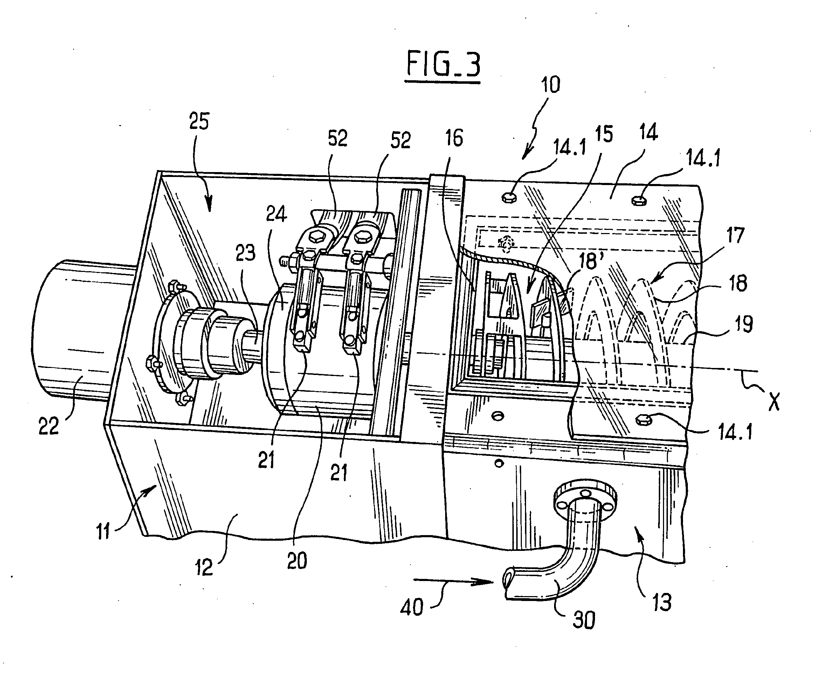

On va maintenant décrire plus en détail les caractéristiques du procédé de traitement selon l'invention, qui concernent essentiellement les opérations intervenant au poste d'étuvage 4, et du dispositif de mise en oeuvre associé, en se référant aux figures 2 et 3.

Conformément à une caractéristique du procédé de l'invention, l'étape d'étuvage est mise en oeuvre dans une enceinte fermée noté 13 qui est équipée d'une vis hélicoïdale de transfert 18 chauffante montée pour tourner autour de son axe X dans ladite enceinte, ladite vis chauffante assurant ainsi le convoyage des graines d'une extrémité amont à une extrémité aval de l'enceinte 13 et le chauffage direct des graines convoyées. Cette étape est fondamentalement mise en oeuvre avec un contrôle de la température et de la vitesse de rotation de la vis chauffante 18 et une gestion de l'atmosphère notée 15 environnant les graines lors du convoyage de celles-ci, pour que les graines entrant dans l'enceinte fermée 13 à une température égale ou supérieure à la température ambiante et avec une teneur pondérale en eau comprise entre 30% et 38% (en poids) sortent de ladite enceinte fermée à une température d'au moins 98°C et avec une teneur pondérale en eau d'au moins 18% (en poids).

On pourra avantageusement utiliser une technique décrite dans le document EP-A-1 051 880 précité, qui enseigne l'utilisation d'un organe hélicoïdal de transfert qui est chauffant, avec en particulier une partie hélicoïdale qui est formée dans sa masse d'un matériau électriquement conducteur, en étant reliée à une source d'alimentation en énergie électrique pour constituer un moyen de transfert chauffant.

L' enceinte fermée 13 peut selon le cas être à parois chauffantes, en utilisant une technique bien connue pour les enceintes de traitement thermique, qui est soit un chauffage électrique par effet Joule, soit un chauffage par circulation d'un fluide caloporteur entre deux épaisseurs de parois. Dans ce cas , il est prévu dans le procédé de l'invention qu'on contrôle également la température des parois chauffantes de l'enceinte 13 pour le chauffage des graines et la gestion de l'atmosphère 15 environnant lesdites graines. On contrôle donc à la fois la température de la vis chauffante 18 et la température des parois chauffantes de de l'enceinte 13. Il sera alors avantageux de prévoir que le contrôle des températures de la vis chauffante 18 et des parois chauffantes de l'enceinte 13 est effectué par une régulation séparée, ce qui confère une souplesse optimale pour la gestion de l'atmosphère.

Les essais menés par les demanderesses tendent à montrer qu'il est préférable de chauffer la vis de transfert plutôt que les parois de l'enceinte, ceci pour éviter les risques de séchage des graines, et les risques de collage contre les parois. En cas de parois chauffantes, on peut prévoir un revêtement interne des parois avec une feuille de polytétrafluorétylène.Il sera à cet effet avantageux de prévoir des organes de raclage des parois, afin d'éviter tout risque de collage ou grillage localisé. Avec une paroi à double enveloppe, on prévoira alors de préférence que la température de la paroi interne est calée sur une valeur proche de la température de la vapeur régnant à l'intérieur de l'enceinte.

Fondamentalement, le dispositif de mise en oeuvre du procédé de traitement selon l'invention comprend une enceinte d'étuvage fermée 13 équipée d'une part de paliers étanches 37, 38 associés aux extrémités amont et aval d'une vis hélicoïdale de transfert 18 qui est chauffante et montée pour tourner autour de son axe X dans ladite enceinte, et d'autre part de moyens étanches amont 33 d'entrée de graines à étuver et de moyens étanches aval 34 de sortie de graines étuvées.

Il est par ailleurs intéressant de prévoir que l'enceinte fermée 13 soit en outre équipée d'une alimentation en vapeur d'eau sous pression, auquel cas, conformément au procédé de l'invention, on contrôle également le maintien de la pression régnant à l'intérieur de l'enceinte dans un intervalle compris entre 0 et 1 KPa par injection ou expulsion de vapeur d'eau, pour une gestion optimale de l'atmosphère 15 environnant les graines convoyées.

On va maintenant décrire plus en détail l'ensemble de l'installation en référence aux figures 2 et 3.

Comme cela est mieux visible sur la figure 3, le dispositif 10 comporte un bâti 11 dont une première partie formant caisson 12 délimite un espace 25 dans lequel sont logés des organes d'entraînement mécanique et d'alimentation électrique. Le bâti 11 comporte également, immédiatement juxtaposée au caisson d'extrémité 12, une enveloppe tubulaire 13 constituant l'enceinte d'étuvage, ladite enveloppe délimitant un espace intérieur noté 15 et étant fermée supérieurement par un capotage étanche 14 boulonné par des boulons 14.1.

A l'intérieur de cet espace fermé 15 est disposé un organe de transfert 17 ayant un axe longitudinal X et une partie hélicoïdale 18 montée pour tourner autour de l'axe X. En l'espèce, la partie hélicoïdale 18 a une forme de bande hélicoïdale plate, qui est fixée sur un arbre central 19. Ceci ne constitue naturellement qu'un exemple, et l'on pourra utiliser toute autre géométrie de type hélicoïdal, avec son arbre central agencé selon l'axe X. Bien que cela ne soit pas visible sur la figure 1, la partie hélicoïdale 18 arrive inférieurement au niveau du fond demi-cylindrique de l'enceinte fermée 13.

De plus, il est avantageux de prévoir sur certaines spires de la partie hélicoïdale 18 des palettes agencées pour relever les graines qui sont au contact des parois de l'enceinte d'étuvage. Sur la figure 3, on distingue une telle palette 18', agencée ici sur une spire sur trois, avec un montage sur la spire concernée permettant de régler l'inclinaison par rapport à l'axe X. Le nombre de telles palettes, ainsi que leur inclinaison et leur forme, seront choisis en fonction du type de graines concerné. Ces palettes, parfois dénommées « releveurs », permettent d'avoir un mélange plus homogène, et évitent le brûlage des graines au contact des parois de l'enceinte.

Conformément à l'enseignement du document EP-A-1 051 880 précité, la partie hélicoïdale 18 est formée dans sa masse d'un matériau électriquement conducteur, et elle est reliée à une source d'alimentation en énergie électrique pour constituer un moyen de transfert chauffant. En l'espèce, la vis chauffante comporte un arbre central, et cet arbre 19 est rigidement solidaire d'un tambour 20 en matériau électriquement conducteur, sur lequel frotte des charbons 21 d'amenée du courant électrique reliés par des fils conducteurs (non visibles sur la figure 3) à une source d'alimentation en énergie électrique. Bien entendu, les charbons d'alimentation 21 pourraient être remplacés par des bagues conductrices ou des balais conducteurs frottant sur la surface extérieure du tambour. Le tambour 30 est relié à l'arbre de sortie 23 d'un moteur électrique d'entraînement en rotation 22 par l'intermédiaire d'un joint d'accouplement 24 en matériau électriquement isolant. Ce joint d'accouplement 24 assure aussi une fonction d'isolation électrique entre le moteur 22 et la partie hélicoïdale chauffante 18. Il est à noter que le tambour 20 et l'ensemble d'accouplement au moteur se trouvent logés dans le compartiment 25 délimité par le caisson 12, ce qui permet d'obtenir une sécurité optimale dans la mesure où ce compartiment est isolé physiquement de la partie traitement du dispositif.

En l'espèce, l'enceinte tubulaire 13 est fermée par le capotage étanche 14, et l'on distingue une conduite d'amenée 30 débouchant en 31 dans l'espace 15, ladite conduite 30 étant reliée à une source d'alimentation en pression (non représentée ici et simplement symbolisée par la flèche 40). La conduite d'amenée 30 et sa vanne associée 32 constituent un circuit d'amenée de fluide sous pression, en l'espèce de la vapeur d'eau.

En revenant maintenant à la figure 2, on distingue les paliers étanches 37 et 38 associés respectivement aux extrémités amont et aval de l'organe de transfert 17, c'est-à-dire plus particulièrement en l'espèce de l'arbre 19 portant la partie hélicoïdale 18. Ces paliers étanches 37, 38 sont ici agencés au niveau de brides d'extrémité étanches notées 16'. De façon générale, quelle que soit la structure retenue pour constituer l'enveloppe tubulaire 13, il sera avantageux de prévoir que celle-ci est constituée d'un matériau isolant électriquement, afin d'éviter toute création de courants parasites ou d'étincelles avec la partie hélicoïdale 18 qui passe tout près de la face interne de l'enceinte fermée.

La figure 2 permet également de distinguer les moyens d'entrée des graines à étuver notés 33, et les moyens de sortie des graines étuvées notés 34.

Ces moyens d'entrée 33 et de sortie 34 seront de préférence réalisés sous la forme d'écluses ou de sas étanches. En l'espèce, on a représenté des écluses étanches, du type à vannes guillotines.

Ainsi, les moyens amont d'entrée des graines à étuver 33 comportent une chambre 33.1 fermée supérieurement et inférieurement par des écluses respectivement 33.2, 33.4, lesquelles écluses sont reliées à des vérins d'actionnement alternatif respectifs 33.3, 33.5. Lorsque l'écluse 33.2 est ouverte, le produit à traiter peut pénétrer, comme schématisé par la flèche 41, dans la chambre 33.1, et ce produit passe ensuite dans l'enceinte fermée 13 lorsque l'écluse inférieure 33.4 est à son tour ouverte, en passant alors par un conduit amont supérieur 33.6 communiquant avec l'espace intérieur 15 de l'enceinte fermée 13, plus précisément dans la partie amont de celle-ci.

De la même façon, les moyens aval de sortie des graines étuvées 34 comportent une chambre 34.1 fermée inférieurement et supérieurement par des écluses 34.2, 34.4, lesquelles sont respectivement reliées à des vérins d'actionnement 34.3, 34.5. Lorsque l'écluse supérieure 34.2 est ouverte, les graines étuvées qui ont pénétré dans un conduit aval de sortie 34.6, arrivent dans la chambre 34.1. Enfin, quand l'écluse inférieure 34.4 est ouverte, ces graines étuvées peuvent s'écouler librement, comme schématisé par la flèche 42, vers des organes de réception et/ou de convoyage associés non représentés ici.

Dans la pratique, les moyens d'entrée et de sortie 33, 34 des graines sont actionnés périodiquement, tandis que les graines sont convoyées en continu par la vis chauffante 18.

Ainsi que cela a été dit plus haut, l'enceinte fermée 13 est en outre reliée à une source d'alimentation en vapeur sous pression, ici schématisée par la flèche 40, pour soumettre l'espace intérieur étanche 15 à une pression déterminée essentiellement comprise entre 0 et 1 KPa. L'enceinte d'étuvage 13 est ainsi équipée d'un circuit d'alimentation 30 et d'un circuit de purge 35, pour respectivement l'introduction ou l'expulsion de vapeur sous pression, chacun desdits circuits étant muni d'une vanne pilotée 32, 36 associée.

Lorsque les graines de riz sont convoyées progressivement à l'intérieur de l'enceinte fermée 13 par la rotation de la vis chauffante 18, l'espace disponible intérieur noté 15 constitue ce que l'on appelle « l'atmosphère » environnant les graines lors du convoyage de celles-ci. C'est précisément cette atmosphère que l'on cherche à gérer avec autant de précision et de fiabilité que possible, afin notamment de contrôler l'humidité environnante, et par suite la teneur pondérale en eau que doivent présenter les graines en sortie de l'enceinte d'étuvage.

D'une façon générale, les contrôles de la température et de la vitesse de rotation de la vis chauffante 18, et l'éventuel contrôle de la température des parois chauffantes si de telles parois sont prévues, ainsi que la gestion de l'atmosphère 15 environnant les graines convoyées, sont mis en oeuvre pour que les graines étuvées sortent de l'enceinte fermée 13 à une température comprise entre 98°C et 110°C et avec une teneur pondérale en eau comprise entre 18% et 35% (en poids).

On distingue également sur la figure 2 la présence de capteurs 55, ici au niveau des extrémités amont et aval du capotage étanche 14. L'un au moins de ces capteurs sert à mesurer la pression régnant dans l'espace intérieur 15. Ceci permet de contrôler que le niveau de pression correspond bien à celui qui a été prédéterminé en fonction du type de produit concerné par l'étuvage. Ces capteurs 55 permettent également de mesurer la température et l'humidité régnant dans l'espace 15.

On a également illustré un capteur 57 permettant de mesurer la température des parois chauffantes lorsque de telles parois sont prévues.

Les deux capteurs 55 sont reliés par des lignes 54 à un dispositif 53 de traitement du signal, et de même le capteur 57 est relié à ce dispositif de traitement 53 par une ligne 56. Le dispositif de traitement 53 fait partie d'un ensemble de commande noté 50, dont l'organe central 51 reçoit tous les signaux provenant du dispositif de traitement 53, et adresse des instructions de commande correspondante
- à une borne 61 du moteur d'entraînement 22 par la ligne 60, pour déterminer la vitesse de rotation de l'hélice chauffante 18,
- à une génératrice de courant (non représentée ici) reliée par des lignes 52 aux charbons frotteurs 21, pour déterminer la température de la vis chauffante 18,
- et éventuellement aussi à un organe 59 de pilotage de la température des doubles parois, via une ligne 58, lorsque de telles doubles parois sont prévues.

L'ensemble de l'installation sera de préférence piloté par un automate en fonction du produit concerné. Le temps de séjour des graines dans l'enceinte fermée sera réglé par la vitesse de rotation de la partie hélicoïdale 18, et le débit de graines, avec l'actionnement des vérins associés aux écluses des moyens d'entrée et de sortie, feront partie du pilotage de l'ensemble avec les asservissements et temporisations nécessaires.

A la place des écluses à vannes guillotines pilotées, on pourra en variante utiliser des écluses rotatives dans la mesure où le niveau de pression rencontré en l'espèce, qui ne dépasse pas 1 KPa, est parfaitement compatible avec l'étanchéité obtenue au moyen de telles écluses rotatives.

On est ainsi parvenu à réaliser un dispositif qui est à la fois simple, et peu encombrant, et aussi faiblement consommateur d'énergie, tout en permettant des traitements d'étuvage sous une pression de niveau variable et pilote.

Contrairement aux techniques connues rappelées plus haut, en particulier celle décrite dans le document WO-A-99/65332 qui utilise une conduite tubulaire hélicoïdale mise en vibration, le procédé et le dispositif de l'invention permettent une très grande souplesse de réglage en fonction des graines concernées, et ce tout en conservant le mode d'étuvage confiné qui est très favorable sur le plan thermique. On évite donc les risques de collage et de grillage localisé des graines. Le temps de séjour et l'homogénéité de l'ensemble circulant dans l'enceinte fermée sont parfaitement maîtrisés.

De plus, le pilotage de la pression par injection de vapeur d'eau permet de mieux transformer les amidons du riz en conservant plus longtemps l'humidité à coeur des graines. Ceci permet d'obtenir des qualités organoleptiques et texturales qui sont optimales pour le riz ainsi étuvé.

Dans la pratique, un temps de séjour de l'ordre de 15 à 30 minutes sera suffisant pour du riz de type cargo. Pour ce qui est de la température de la vis chauffante, on choisira en général une gamme de températures de l'ordre de 170°C à 180°C. On pourra prévoir un polimiroir sur les faces chauffantes de la vis visant à diminuer les risques de collage. Si l'on envisage un revêtement de protection desdites faces chauffantes, on préférera en l'espèce un revêtement en céramique ou en émail plutôt qu'un revêtement classique en polytétrafluoréthylène, en raison des propriétés très abrasives du riz.

Si l'on revient enfin à la représentation symbolique de la figure 1, on trouve, en aval du poste d'étuvage 4, un poste de séchage 5 et éventuellement un poste d'usinage 6.

Lors de l'étape de séchage, on pourra éventuellement prévoir un passage des graines étuvées entre des rouleaux afin de les aplatir, ce qui permet de créer mécaniquement des interstices ou fissures dans les graines, et par suite de favoriser la pénétration de l'eau pour une réhydratation ultérieure lors de la consommation. A l'issue du traitement de séchage, la teneur pondérale en eau qui était d'au moins 18% (en poids) après étuvage, tombe alors à une valeur de l'ordre de 12,5% pour une bonne conservation du riz ainsi étuvé.

L'usinage final, s'il est prévu, sera quant à lui effectué de façon connue à sec ou à une humidité intermédiaire, par exemple dans un cône à blanchir ou analogue.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Procédé de traitement de graines céréales entières décortiquées, comportant des étapes successives de trempage des graines dans de l'eau, d'égouttage, d'étuvage, et de séchage, **caractérisé en ce que** l'étape d'étuvage est mise en oeuvre dans une enceinte fermée (13) équipée d'une vis hélicoïdale de transfert (18) qui est chauffante et montée pour tourner autour de son axe dans ladite enceinte, ladite vis chauffante assurant à la fois le convoyage des graines d'une extrémité amont à une extrémité aval de l'enceinte (13) et le chauffage direct des graines convoyées, avec un contrôle de la température et de la vitesse de rotation de la vis chauffante (18) et une gestion de l'atmosphère (15) environnant les graines lors du convoyage de celles-ci, pour que les graines entrant dans l'enceinte fermée (13) à une température égale ou supérieure à la température ambiante et avec une teneur pondérale en eau comprise entre 30% et 38% sortent de ladite enceinte fermée à une température d'au moins 98°C et avec une teneur pondérale en eau d'au moins 18%.

2. Procédé de traitement selon la revendication 1, dans lequel l'enceinte fermée (13) est à parois chauffantes, **caractérisé en ce qu'**on contrôle également la température des parois chauffantes de l'enceinte (13) pour le chauffage des graines et la gestion de l'atmosphère (15) environnant lesdites graines.

3. Procédé de traitement selon la revendication 2, **caractérisé en ce que** le contrôle des températures de la vis chauffante (18) et des parois chauffantes de l'enceinte (13) est effectué par une régulation séparée.

4. Procédé de traitement selon la revendication 1, dans lequel l'enceinte fermée (13) est équipée d'une alimentation (30) en vapeur d'eau sous pression, **caractérisé en ce qu'**on contrôle le maintien de la pression régnant à l'intérieur de l'enceinte fermée (13) dans un intervalle compris entre 0 et 1 KPa par injection ou expulsion de vapeur d'eau, pour une gestion optimale de l'atmosphère (15) environnant les graines convoyées.

5. Procédé de traitement selon l'une des revendications 1 à 4, **caractérisé en ce que** les contrôles des températures et de la vitesse de rotation, ainsi que la gestion de l'atmosphère (15) environnant les graines convoyées, sont mis en oeuvre pour que les graines étuvées sortent de l'enceinte fermée(13) à une température comprise entre 98°C et 110°C et avec une teneur pondérale en eau comprise entre 18% et 35%.

6. Procédé de traitement selon l'une des revendications 1 à 5, dans lequel l'enceinte fermée (13) est équipée de moyens étanches amont (33) d'entrée de graines à étuver et de moyens étanches aval (34) de sortie de graines étuvées, **caractérisé en ce que** les moyens d'entrée et de sortie (33, 34) des graines sont actionnés périodiquement, tandis que les graines sont convoyés en continu par la vis chauffante (18).

7. Dispositif de mise en oeuvre d'un procédé de traitement selon l'une au moins des revendications 1 à 6, **caractérisé en ce qu'**il comprend une enceinte d'étuvage fermée (13) équipée d'une part de paliers étanches (37, 38) associés aux extrémités amont et aval d'une vis hélicoïdale de transfert (18) qui est chauffante et montée pour tourner autour de son axe (X) dans ladite enceinte, et d'autre part de moyens étanches amont (33) d'entrée de graines à étuver et de moyens étanches aval (34) de sortie de graines étuvées, ladite enceinte fermée (13) étant en outre reliée à une source d'alimentation en vapeur sous pression (40) pour soumettre l'espace intérieur étanche (15) ainsi délimité à une pression déterminée comprise entre 0 et 1 KPa.

8. Dispositif selon la revendication 7, **caractérisé en ce que** la vis chauffante (18) comporte une partie hélicoïdale formée dans sa masse d'un matériau électriquement conducteur, ladite partie hélicoïdale étant reliée à une source d'alimentation en énergie électrique.

9. Dispositif selon la revendication 8, **caractérisé en ce que** la partie hélicoïdale de la vis chauffante (18) est équipée de palettes (18') agencées pour relever les graines qui sont au contact des parois de l'enceinte d'étuvage (13).

10. Dispositif selon la revendication 8, **caractérisé en ce que** l'enceinte d'étuvage (13) est constituée d'un matériau isolant électriquement.

11. Dispositif selon la revendication 7, **caractérisé en ce que** l'enceinte d'étuvage (13) est une enceinte tubulaire à parois chauffantes.

12. Dispositif selon la revendication 7, **caractérisé en ce que** l'enceinte d'étuvage (13) est équipée d'un circuit d'alimentation (30) et d'un circuit de purge (35) pour l'introduction ou l'expulsion de vapeur sous pression, chacun desdits circuits étant respectivement muni d'une vanne pilotée (32 ; 36).

13. Dispositif selon la revendication 7, **caractérisé en ce que** les moyens d'entrée (33) de graines à étuver et/ou les moyens de sortie (34) de graines étuvées sont réalisés sous la forme d'écluses ou de sas étanches.

14. Dispositif selon la revendication 13, **caractérisé en ce que** les moyens d'entrée et de sortie (33 ; 34) sont des écluses (33.1 ; 34.1) à vannes guillotines pilotées (33.2, 33.4 ; 34.2, 34.4).

## Claims

1. A method of processing hulled whole grain cereal, the method comprising successive steps of soaking the grains in water, draining, parboiling, and drying, the method being **characterized in that** the parboiling step is implemented in a closed enclosure (13) fitted with a helical transfer screw (18) that delivers heat and that is mounted to revolve about its own axis within said enclosure, said heating screw serving both to convey grains from an upstream end of the enclosure (13) to a downstream end thereof and to heat directly the grains being conveyed, with the temperature and the speed of rotation of the heating screw (18) being controlled and with the atmosphere (15) surrounding the grains while they are being conveyed being managed, so that the grains entering into the closed enclosure (13) at a temperature equal to or higher than ambient temperature and with a water content by weight lying in the range 30% to 38%, leave said closed enclosure at a temperature of at least 98°C and with a water content by weight of at least 18%.

2. A processing method according to claim 1, in which the closed enclosure (13) has heating walls, **characterized in that** the temperature of the heating walls of the enclosure (13) is also controlled in order to heat the grains and manage the atmosphere (15) surrounding said grains.

3. A processing method according to claim 2, **characterized in that** the temperatures of the heating screw (18) and of the heating walls of the enclosure (13) are controlled with separate regulation.

4. A processing method according to claim 1, in which the closed enclosure (13) is fitted with a supply (30) of steam under pressure, the method being **characterized in that** the pressure that exists inside the closed enclosure (13) is maintained in a range from 0 to 1 kPa by injecting or exhausting steam, to obtain good management of the atmosphere (15) surrounding the grains being conveyed.

5. A processing method according to any one of claims 1 to 4, **characterized in that** the temperatures and the speed of rotation, and also the atmosphere (15) surrounding the grains being conveyed are controlled so that the parboiled grains leave the closed enclosure (13) at a temperature lying in the range 98°C to 110°C and with a water content by weight lying in the range 18% to 35%.

6. A processing method according to any one of claims 1 to 5, in which the closed enclosure (13) is fitted with leaktight upstream means (33) for admitting grains for parboiling and with leaktight downstream means (34) for discharging parboiled grains, the method being **characterized in that** the means (33, 34) for admitting and discharging grains are actuated periodically, while the grains are conveyed continuously by the heating screw (18).

7. A device for implementing a processing method at least one of claims 1 to 6, the device being **characterized in that** it comprises a closed parboiling enclosure (13) fitted firstly with leaktight bearings (37, 38) associated with the upstream and downstream ends of a helical transfer screw (18) that also supplies heat, and that is mounted to revolve about its own axis (X) in said enclosure, and secondly with leaktight upstream inlet means (33) for admitting grains to be parboiled and leaktight downstream outlet means (34) for discharging parboiled grains, said closed enclosure (13) also being connected to a source (40) of steam under pressure for subjecting the leaktight inside space (15) as defined in this way to a determined pressure lying in the range 0 to 1 kPa.

8. A device according to claim 7, **characterized in that** the heating screw (18) has a helical portion made out of a solid electrically conductive material, said helical portion being connected to an electricity power supply.

9. A device according to claim 8, **characterized in that** the helical portion of the heating screw (18) is fitted with tabs (18') arranged to lift the grains that are in contact with the walls of the parboiling enclosure (13).

10. A device according to claim 8, **characterized in that** the parboiling enclosure (13) is made of an electrically insulating material.

11. A device according to claim 7, **characterized in that** the parboiling enclosure (13) is a tubular enclosure having heating walls.

12. A device according to claim 7, **characterized in that** the parboiling enclosure (13) is fitted with a feed circuit (30) and with a purge circuit (35) for introducing and expelling steam under pressure, each of said circuits being fitted with a respective controlled valve (32; 36).

13. A device according to claim 7, **characterized in that** the inlet means (33) for admitting grains for parboiling and/or the outlet means (34) for discharging parboiled grains are made in the form of leaktight airlocks or sluices.

14. A device according to claim 13, **characterized in that** the inlet and outlet means (33; 34) are sluices (33.1; 34.1) having controlled guillotine valves (33.2, 33.4; 34.2; 34.4).

## Patentansprüche

1. Verfahren zur Behandlung von ganzen entspelzten Getreidekörnern, umfassend die aufeinanderfolgenden Schritte des Einweichens der Körner in Wasser, des Entwässerns, der Wärmebehandelns und des Trocknens, **dadurch gekennzeichnet, dass** der Schritt des Wärmebehandelns in einer geschlossenen Kammer (13) durchgeführt wird, die mit einer schraubenförmigen Förderschnecke (18) ausgerüstet ist, die beheizbar und zur Drehung um ihre Achse in der genannten Kammer gelagert ist, wobei die genannte Heizschnecke gleichzeitig die Förderung der Körner von einem stromaufwärtigen Ende zu einem stromabwärtigen Ende der Kammer (13) und die direkte Erwärmung der beförderten Körner sicherstellt, mit einer Steuerung der Temperatur und der Drehgeschwindigkeit der Heizschnecke (18) und einer Steuerung der Atmosphäre (15), die die Körner während deren Förderung umgibt, damit die Körner, die in die geschlossene Kammer (13) mit einer Temperatur eintreten, die gleich oder über der Umgebungstemperatur ist bzw. liegt, und mit einem Gewichtsgehalt an Wasser, der zwischen 30% und 38% liegt, die genannte geschlossene Kammer mit einer Temperatur von mindestens 98°C und mit einem Gewichtsgehalt an Wasser von mindestens 18% verlassen.

2. Verfahren zur Behandlung nach Anspruch 1, wobei die geschlossene Kammer (13) beheizbare Wände hat, **dadurch gekennzeichnet, dass** man ferner die Temperatur der beheizbaren Wände der Kammer (13) für die Erwärmung der Körner und die Steuerung der die genannten Körner umgebenden Atmosphäre (15) steuert.

3. Verfahren zur Behandlung nach Anspruch 2, **dadurch gekennzeichnet, dass** die Steuerung der Temperaturen der Heizschnecke (18) und der beheizbaren Wände der Kammer (13) durch eine getrennte Regelung erfolgt.

4. Verfahren zur Behandlung nach Anspruch 1, wobei die geschlossene Kammer (13) mit einer Versorgung (30) mit unter Druck stehendem Wasserdampf ausgerüstet ist, **dadurch gekennzeichnet, dass** man das Halten des im Inneren der geschlossenen Kammer (13) herrschenden Druckes in einem Bereich zwischen 0 und 1 KPa durch Einspritzen oder Ausstoßen von Wasserdampf steuert, für eine optimale Steuerung der Atmosphäre (15), die die beförderten Körner umgibt.

5. Verfahren zur Behandlung nach einem der Ansprüche 1 bis 4, **dadurch gekennzeichnet, dass** die Steuerungen der Temperaturen und der Drehgeschwindigkeit sowie die Steuerung der Atmosphäre (15), die die beförderten Körner umgibt, derart durchgeführt werden, dass die wärmebehandelten Körner die geschlossene Kammer (13) mit einer Temperatur verlassen, die zwischen 98°C und 110°C liegt, und mit einem Gewichtsgehalt an Wasser, der zwischen 18% und 35% liegt.

6. Verfahren zur Behandlung nach einem der Ansprüche 1 bis 5, wobei die geschlossene Kammer (13) mit dichten stromaufwärtigen Einlassmitteln (33) zum Zuführen von zu wärmebehandelnden Körnern und dichten stromabwärtigen Auslassmitteln (34) zum Abführen von wärmebehandelten Körnern ausgestattet ist, **dadurch gekennzeichnet, dass** die Einlass- und Auslassmittel (33, 34) für die Körner periodisch betätigt werden, wohingegen die Körner durch die Heizschnecke (18) kontinuierlich befördert werden.

7. Vorrichtung zum Durchführen eines Behandlungsverfahrens nach mindestens einem der Ansprüche 1 bis 6, **dadurch gekennzeichnet, dass** sie eine geschlossene Wärmebehandlungskammer (13) umfasst, die einerseits mit dichten Lagern (37, 38) versehen ist, die mit dem stromaufwärtigen und dem stromabwärtigen Ende einer schraubenförmigen Förderschnecke (18) verbunden sind, die beheizbar und zur Drehung um ihre Achse (X) in der genannten Kammer gelagert ist, sowie andererseits mit dichten stromaufwärtigen Einlassmitteln (33) zum Zuführen von zu wärmebehandelnden Körnern und mit dichten stromabwärtigen Auslassmitteln (34) zum Abführen von wärmebehandelten, wobei die genannte geschlossene Kammer (13) ferner mit einer Quelle (40) zur Versorgung mit unter Druck stehendem Dampf verbunden ist, um den so begrenzten dichten inneren Raum (15) auf einen vorgegebenem Druck zwischen 0 und 1 KPa zu bringen.

8. Vorrichtung nach Anspruch 7, **dadurch gekennzeichnet, dass** die Heizschnecke (18) einen schraubenförmigen Teil umfasst, der als Ganzes aus einem elektrisch leitenden Material gebildet ist, wobei der schraubenförmige Teil mit einer Stromversorgungsquelle verbunden ist.

9. Vorrichtung nach Anspruch 8, **dadurch gekennzeichnet, dass** der schraubenförmige Teil der Heizschnecke (18) mit Schaufeln (18') ausgestattet ist, die derart ausgebildet sind, dass sie die Körner, die mit den Wänden der Wärmebehandlungskammer (13) in Kontakt stehen, anheben.

10. Vorrichtung nach Anspruch 8, **dadurch gekennzeichnet, dass** die Wärmebehandlungskammer (13) aus einem elektrisch isolierenden Material gebildet ist.

11. Vorrichtung nach Anspruch 7, **dadurch gekennzeichnet, dass** die Wärmebehandlungskammer (13) eine rohrförmige Kammer mit beheizbaren Wänden ist.

12. Vorrichtung nach Anspruch 7, **dadurch gekennzeichnet, dass** die Wärmebehandlungskammer (13) mit einem Versorgungskreis (30) und mit einem Auslasskreis (35) für das Einbringen bzw. Ausstoßen von unter Druck stehendem Dampf versehen ist, wobei jeder der genannten Kreise jeweils mit einem gesteuerten Ventil (32; 36) versehen ist.

13. Vorrichtung nach Anspruch 7, **dadurch gekennzeichnet, dass** die Einlassmittel (33) zum Zuführen von zu wärmebehandelnden Körnern und/oder die Auslassmittel (34) zum Abführen von wärmebehandelten Körnern in Form von Schleusen oder dichten Schleusenkammern ausgebildet sind.

14. Vorrichtung nach Anspruch 13, **dadurch gekennzeichnet, dass** die Einlass- und Auslassmittel (33; 34) Schleusen (33.1; 34.1) mit gesteuerten Schieberventilen (33.2, 33.4; 34.2, 34.4) sind.
